# EUROPEAN PATENT APPLICATION

(11) **EP 4 736 632 A1**
(43) Date of publication of application: **06.05.2026**
(21) Application number: 24831114.4
(22) Date of filing: 19.06.2024
(51) Int. Cl.: A01G 13/20, H02S 30/20, H02S 20/32, A01G 9/24

(54) **PHOTOVOLTAIC SOLAR PANEL**

(30) Priority: 28.06.2023 ES 202330542
(71) Applicant: POWERFULTREE S.L., 01510 Vitoria-Gasteiz (ÁLAVA) (ES)
(72) Inventor: DÍAZ LÓPEZ, Juan Diego, 01510 Vitoria-Gasteiz (ÁLAVA) (ES); SOLER ESTEBAN, Alvaro, 01510 Vitoria-Gasteiz (ÁLAVA) (ES); ZUAZO SAENZ DE VITERI, Abraham, 01510 Vitoria-Gasteiz (ÁLAVA) (ES)
(74) Representative: Ibarra Garcia, Isabel
(86) International application number: PCT/ES2024/070386
(87) International publication number: WO 2025/003540

(57) **Abstract**

The present invention relates to a photovoltaic solar panel of the type that rotates around a horizontal axis to adjust the inclination thereof depending on the altitude of the sun. The advantage of the invention resides in including in a photovoltaic solar panel at least one deployable surface that can slide without using electricity and utilizing only the force of gravity. To that end, the photovoltaic solar panel includes a mechanical retaining device provided with a pivoting piece that acts on a retaining lug and a release lug, wherein the pivoting piece is traversed by a ball the position of which defines a locked or unlocked position, and therefore prevents the deployable surface from sliding in the locked position and allows the deployable surface to slide in the unlocked position.

## Description

### FIELD OF THE ART

The present invention relates to a photovoltaic solar panel of the type that rotates around a horizontal axis to adjust the inclination thereof depending on the altitude of the sun to capture solar radiation at all times, enabling the protection of the crop located below movable photovoltaic panels, i.e., promoting plant well-being.

To that end, the present invention is based on a system of deployable surfaces that can be deployed by gravity without requiring electricity and allow the protection of crops located under the photovoltaic panels.

### BACKGROUND OF THE INVENTION

The growing demand for energy and food is causing the responses to each of these problems to begin to converge in terms of the proposals or solutions being developed. Most of the energy that is expected to be generated in the future will require huge amounts of land, making it absolutely necessary to find solutions that reconcile land use, since without the aforementioned convergence in solutions, imbalances in food production will occur.

*Agrivoltaics* is one of the solutions being used in response to the demand for land required by both activities, i.e., energy and food production.

This technology refers to the use of the same space for energy and food generation, such that both processes, within certain restrictions depending on the type of crop and energy generation system, result in reasonable electricity production and, at the same time, a guaranteed result in terms of food production due to the protection that the photovoltaic structure installed on the same land provides to the crop located underneath same.

The growing number of patents being published and that relate to *agrivoltaics* emphasize the arrangement of the panels, such as patent WO 2015/145351, which claims a photovoltaic panel installation movable above a crop, or CH 706132 A2, which does so with fixed panels, or patent WO 2013/117722, which also claims a system of panels above a crop with the possibility of rotation, in addition to the precursor patents applied for in 2013 by the Fraunhofer Institute.

From the aforementioned patents and the numerous publications that have been written in relation to the protection that agrivoltaic systems provide to a crop located under them, it can be concluded that the surface of photovoltaic panels has a significant impact on the crop located under them that is both positive and negative. The most relevant impacts are: decrease in maximum temperature, increase in minimum temperature, decrease in evapotranspiration, decrease in crop water consumption, decrease in photovoltaic panel temperature and, accordingly, an increase in its efficiency, modification of the wind pattern on the surface above the crop, ability to prevent hail impacts on the crop, ability to modify the rainwater pattern on the ground, ability to modify the radiation pattern received by the plant, ability to modify the behavior patterns of certain pollinators, ability to control the growth of unwanted weeds, and other abilities or impacts that will become apparent as the first parks are being installed in France, Japan, the USA, and Germany.

The following references are cited as examples of the reduction in water consumption in crops located under solar panels:
- Ali, A. (2022). Effect of Agrivoltaic Systems Development on Sweet Potato Growth . Agrivoltaics conference. Piacenza.
- Elnaz Hassanpour Adeh, J. S. (2018). Remarkable agrivoltaics influence on soil moisture, micrometeorology and water-use efficiency. PLoS ONE 13(11*).*
- Emily M. Ott, C. A. (2020). Environmental Analysis of Agrivoltaic Systems. Reference Module in Earth Systems and Environmental Sciences.
- Hadi A.AL agele, K. P. (2021). A Case study of Tomato (Solanum lycopersicon var. Legend) Production and Water Productivity in Agrivoltaic System. Sustainability, 2850.
- Richard J. Randle-Boggis, E. L. (2021). Agrivoltaics in East Africa: Opportunities and challenges. In AIP Conference Proceedings. AIP Publishing LLC, 2361(1), 090001.
- Stefano Amaducci, X. Y. (2018). Agrivoltaic systems to optimize land use for electric energy production. Applied Energy 220, 545-561.

The state of the art includes documents WO2021075640A1, WO2023026278A1, and WO2021205114A1, which disclose, among others, systems of the so-called agrivoltaic type that use photovoltaic panels in a farming environment, combining agricultural activity with the generation of solar energy. However, none of them includes the solution proposed in the present invention that is provided with deployable surfaces arranged under the photovoltaic solar panel that can slide by gravity in the direction perpendicular to the axis of rotation of the photovoltaic solar panel.

Based on the above, it is clear that the surface occupied by the panels in relation to the crop, both in terms of area and position, is relevant, therefore making it desirable for the area covered by panels/soil ratio to be adjustable, cost-effective, and easy to manage and maintain, since controlling said panel/soil ratio can increase or decrease the intensity, the timing, and the form that said panel, as an additional surface with respect to that of the photovoltaic solar panel, has with respect to the aforementioned effects.

### DESCRIPTION OF THE INVENTION

The object of the invention is the protection of the crop located below movable photovoltaic panels, i.e., promoting plant well-being, as a result of a photovoltaic solar panel including deployable surfaces that can slide by gravity and do not require electricity for their operation.

In other words, the advantage of the invention resides in the possibility of deploying or extending deployable surfaces without using electricity and utilizing only the force of gravity.

The present invention proposes a system which allows the surface of the photovoltaic solar panel to be enlarged, arranging in the lower part thereof one or two deployable surfaces that can be installed below the photovoltaic solar panel, such that said mentioned deployable surface can be deployed on one or both sides of the axis of rotation of the photovoltaic solar panel, thereby increasing the surface exposed to radiation or to the effects of weather.

The main feature of said deployable surface is that it is possible to deploy or retract same without the need for any type of energy-consuming actuator, using the simple force of gravity for its deployment, utilizing for that purpose the variable angle allowed by current systems of solar photovoltaic panels mounted on a rotary shaft such that the panel rotates around a horizontal axis to adjust the inclination thereof depending on the altitude of the sun. In this regard, the photovoltaic solar panel rotates about its axis of rotation, such that upon rotating to one side, it is possible to act on a mechanism referred to as a mechanical retaining device intended for releasing the deployable surface so that the latter can be deployed in that direction.

Namely, the photovoltaic solar panel is formed by at least the following elements:
- at least one deployable surface arranged under a photovoltaic solar panel that can slide by gravity in the direction perpendicular to the axis of rotation of the photovoltaic solar panel,
- linear guides arranged on the deployable surface,
- a release retainer fixed on the deployable surface,
- an end-of-travel retainer fixed on the deployable surface,
- a mechanical retaining device integral with the photovoltaic solar panel provided with a pivoting piece which pivots about its shaft, having a protrusion and respective lugs at its ends: a retaining lug and a release lug, and wherein the pivoting piece is traversed by a ball the position of which defines a locked or unlocked position, such that the release lug in the locked position faces the release retainer and prevents the deployable surface from sliding, whereas in the unlocked position the retaining lug faces the end-of-travel retainer after the sliding of the deployable surface.

Based on this configuration, the sliding of the deployable surface on one or both sides of the photovoltaic solar panel runs through the linear guides arranged on the deployable surface. The mechanical retaining device locks and unlocks the sliding of the deployable surface depending on the position of the pivoting piece defined by the position of the ball which is modified according to the rotation of the photovoltaic solar panel.

In the event of installing two deployable surfaces, the present invention also contemplates the inclusion of two mechanical retaining devices linked to the deployable surfaces so that when the photovoltaic solar panel rotates about its axis of rotation, said panel can be deployed or extended, if desired.

Although the invention described optionally allows for an increase in the energy capacity of the photovoltaic panel, the different configurations allowed by the invention are primarily aimed at protecting the crop, so the configuration and materials to be used will vary depending on the crop. In that regard, among other options, the present invention contemplates the following embodiments:
- Photovoltaic panels with transparent deployable panels or panels that include light to provide an emissive surface. In that second case, the light is made up of electronic lights, which are preferably spectrum-modulable, that are arranged on the lower face of the deployable surface to photo-stimulate the photosynthetic behavior of a crop in different environmental and temporal conditions according to its phenological progress.
- Photovoltaic panels with opaque deployable panels (light-transmitting surface) to protect against rain, wind, hail, and shade.

In that regard, the deployable surface can be passive or active in terms of its light-transmitting, light-emitting, thermal, and electrical functions. In that regard, the deployable surface can be carried out as a board made of a rigid material providing protection for the crop and consists of a solar panel, an opaque panel, a transparent panel, or a panel with photochromic or thermochromic behavior to control the amount of light or radiation reaching the crop. In the event that the deployable surface consists of a solar panel, it serves a dual purpose: increasing the surface and increasing the production of electrical energy.

In the event that the deployable surface is an active surface, it could be used to store heat that will be radiated by emission during its cooling period, allowing the climate in the areas close to said surfaces to be moderated and helping to combat frost in crops.

If the surface is light-emitting, light generated preferably by LEDs or equivalent elements can be emitted to thus illuminate the crop and improve its growth. Finally, if the surface is light-transmitting, the amount of light that said deployable surface allows to be projected onto the crop can be controlled.

For example, the deployable surface can be provided on its upper part with a reflective surface finish to reflect the light, generating a greater albedo effect. In that regard, if photovoltaic solar panels are bifacial, they acquire more radiation and therefore generate more electrical energy.

Also, and on the other hand, cities are experiencing a problem related to rising temperatures due to heat capture on asphalt surfaces, sidewalks, roofs, and vehicles parked on the ground. The lack of trees prevents proper cooling and also causes heat to accumulate in areas close to the ground, between 0 and 100 cm, exposing pets and children to extreme temperatures due to radiation from the ground, sidewalks, and roadways, from the energy accumulated in them.

For this reason, the deployable surface located below the photovoltaic solar panel could be an active thermal-conductive, even porous, surface (porosity would allow water to be stored in the sheet for spaced evaporation), allowing the area located under same to be cooled as a result of the reduction in temperature generated in the lower part of the deployable surface by means of forced convective evaporation of water deposited on same in a controlled manner. Said forced convective evaporation will preferably be generated by means of a blower powered by the photovoltaic solar panel that acts on both parts (upper part and lower part) of the deployable surface. The photovoltaic solar panel is thereby provided with water dispensing nozzles, surface water detectors, and a control device that allow water to be supplied to the upper part of the deployable surface so that the natural evaporation of the water supplied causes the cooling of the lower part and of the upper part of the deployable surface.

In that regard, the water deposited on the upper part of the deployable surfaces evaporates, the water dispensing nozzles are controlled by a blowing and water dispensing control device that adjusts the driving speed of the air that runs across the deployable surface and controls the amount of water deposited on the upper part such that it prevents water from dripping. The blower is preferably powered by the energy produced by the photovoltaic solar panel.

The applications of the present invention are aimed at cooling urban spaces beyond merely covering them, utilizing part of the energy generated by the photovoltaic solar panels, cooling crops, greenhouses, and generally any area that needs shade and climate control of temperature and humidity.

In this sense, optionally, the photovoltaic solar panel of the invention is provided with a thermal actuation component positioned under the deployable surface to heat a volume of air and influence the creation of a controllable microclimate that can be adapted to environmental conditions.

Lastly, by utilizing the movement of the deployable surface, the photovoltaic solar panel can be cleaned as a result of the extension movement of the deployable surface. In that regard, the device of the invention optionally includes a rotary brush which is attached to the deployable surface in such a way that the rotary brush is arranged in contact with the surface of the photovoltaic solar panel. The rotary brush travelling over the surface of the photovoltaic solar panel is thereby enabled when the deployable surface slides to remove dust from the surface of the photovoltaic solar panel.

It should be noted that said rotary brush can consist of another cleaning element that serves for an equivalent function and the objective of which will be to travel across the photovoltaic solar panel to remove dust when the process of folding and retracting the deployable surface is carried out.

### DESCRIPTION OF THE DRAWINGS

To complement the description to be made below and for the purpose of helping to better understand the features of the invention according to a preferred practical embodiment thereof, a set of drawings is attached as an integral part of said description in which the following is depicted in an illustrative and non-limiting manner:
Figure 1 shows a side elevational view of a photovoltaic solar panel according to the preferred embodiment of the invention, wherein the mechanical retaining device is in the locked position and the deployable surface is not extended.
Figure 2 shows a view of the invention depicted in the preceding figure, wherein the mechanical retaining device is in the unlocked position and the deployable surface is extended.
Figure 3 shows a detail of the invention depicted in Figure 2, taken from the opposite side.
Figure 4 shows a side elevational view of a photovoltaic solar panel according to the preferred embodiment of the invention depicted in the preceding figures, wherein the mechanical retaining device is in the locked position and the deployable surface is not extended, with the inclination of the photovoltaic solar panel being arranged differently from what has been depicted previously.
Figure 5 shows a perspective view of the mechanical retaining device involved in the photovoltaic solar panel object of the invention.
Figure 6 shows a bottom perspective view of the photovoltaic solar panel according to the preferred embodiment of the invention depicted in the preceding figures, where a detail of the blower and the rotary brush attached to the deployable surface and in contact with the surface of the photovoltaic solar panel can be seen.
Figure 7 shows a bottom perspective view of the photovoltaic solar panel according to the preferred embodiment of the invention depicted in the preceding figures, where a detail of the water detectors can be seen.
Figure 8 shows a bottom perspective view of the photovoltaic solar panel according to the preferred embodiment of the invention depicted in the preceding figures, wherein the deployable surface is in the extended position.
Figure 9 shows a diagram illustrating the variables involved in the blowing control device.
Figure 10 shows a diagram illustrating the variables involved in the electronic panel angle control device for the photovoltaic solar panel.

### PREFERRED EMBODIMENT OF THE INVENTION

According to a preferred embodiment of the invention depicted in the described figures, the photovoltaic solar panel (1) of the type that rotates around a horizontal axis to adjust the inclination thereof depending on the altitude of the sun, is formed by the following elements:
- A deployable surface (3) arranged under a photovoltaic solar panel (1) that can slide by gravity in the direction perpendicular to the axis of rotation (2) of the photovoltaic solar panel (1). In an optional embodiment of the invention, the photovoltaic solar panel may include two deployable surfaces (3).
- Linear guides (22) arranged on the deployable surface (3).
- A release retainer (31) fixed on the deployable surface (3).
- An end-of-travel retainer (5) fixed on the deployable surface (3).
- A mechanical retaining device (7) integral with the photovoltaic solar panel (1) provided with a pivoting piece (6) which pivots about its shaft (9), having a protrusion (10) and respective lugs at its ends: a retaining lug (30) and a release lug (23), and wherein the pivoting piece (6) is traversed by a ball (8) the position of which defines a locked or unlocked position, such that the release lug (23) in the locked position faces the release retainer (31) and prevents the deployable surface (3) from sliding, whereas in the unlocked position the retaining lug (30) faces the end-of-travel retainer (5) after the sliding of the deployable surface (3).

In that regard, the sliding of the deployable surface (3) on one or both sides of the photovoltaic solar panel (1) runs through the linear guides (22) arranged on the deployable surface (3), whereas the mechanical retaining device (7) locks and unlocks the sliding of the deployable surface (3) depending on the position of the pivoting piece (6) defined by the position of the ball (8) which is modified according to the rotation of the photovoltaic solar panel (1).

The linear guides (22) will preferably be arranged in the lower part of the deployable surface (3), being located on the sides or in the central part of the deployable surface, perpendicular to the axis of rotation (2) about which the photovoltaic solar panel (1) tracks the sun. Said linear guides (22) will be provided with their corresponding end-of-travel retainers (5) and release retainers (31) so that the deployable surface (3) does not come out of its position.

In that regard, when the photovoltaic solar panel (1) is rotated about its axis of rotation (2), the linear guides (22) guide the movement of the mentioned deployable surfaces (3) on one or both sides of the photovoltaic solar panel (1) in order to enlarge the exposed surface on one or both sides of the axis of rotation (2) of the photovoltaic solar panel (1).

As described in detail above, a working angle system based on the mechanical retaining device (7) allows the deployable surface (3) to be released such that gravity allows it to slide towards the ground until reaching the maximum sliding stop as a result of the end-of-travel retainer (5), which is stopped by the retaining lug (30), thereby allowing the assembly of the photovoltaic solar panel (1) and deployable surfaces (3) to rotate about the axis of rotation (2), with the deployable surface (3) remaining extended. Optionally, said release lug (23) and the retaining lug (30) are electromechanically activated for the controlled regulation by a retraction locking device (24) on both sides of the deployable surfaces (3).

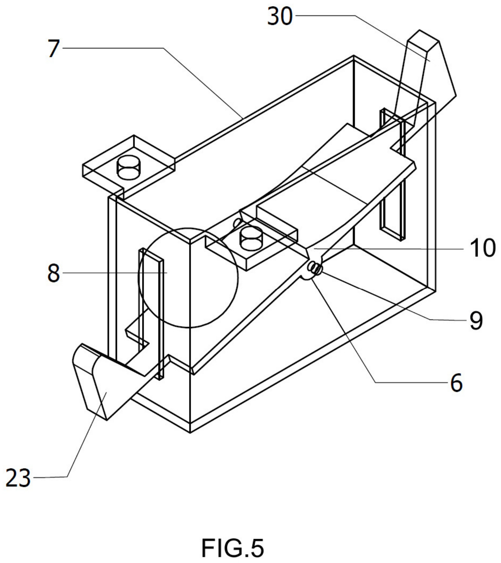

As indicated above, the mechanical retaining device (7) depicted in detail in Figure 5 is based on generating an imbalance in a ball (8) of a calculated mass located inside a case making up the mechanical retaining device (7). The mentioned mechanical retaining device (7) is integral with the assembly of the photovoltaic solar panel (1) and with the deployable surface (3) which, after a certain angle of inclination of the deployable surfaces (3), will cause the pivoting piece (6) that supports the lugs to pivot about its axis (9) as the photovoltaic solar panel (1), and integrally with same, the deployable surface (3) rotate.

From a calculated angle, due to its weight, the ball (8) will rise above/pass over the protrusion (10), abruptly being displaced in the direction determined by gravity, causing the pivoting piece (6) to pivot, causing the release lug (23) to stop holding the release retainer (31) fixed to the structure supporting the photovoltaic solar panels (1), and allowing the deployable surface (3) to be deployed or extended by gravity when released.

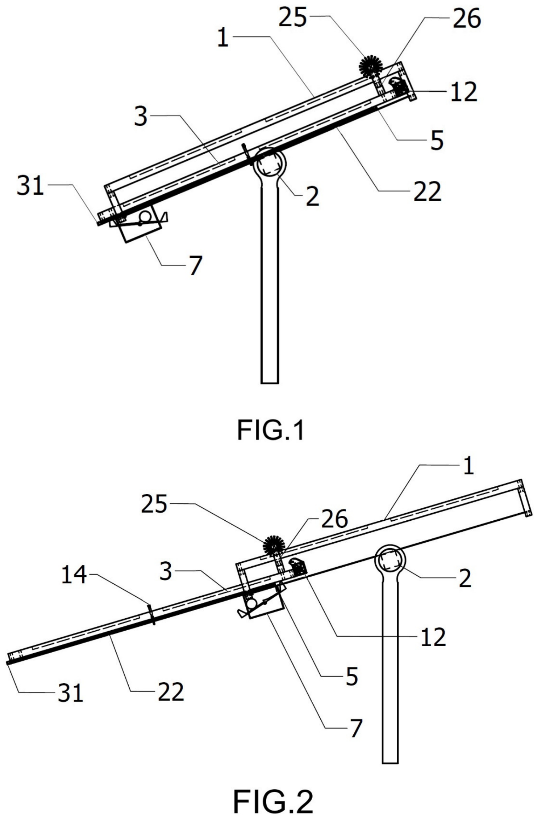

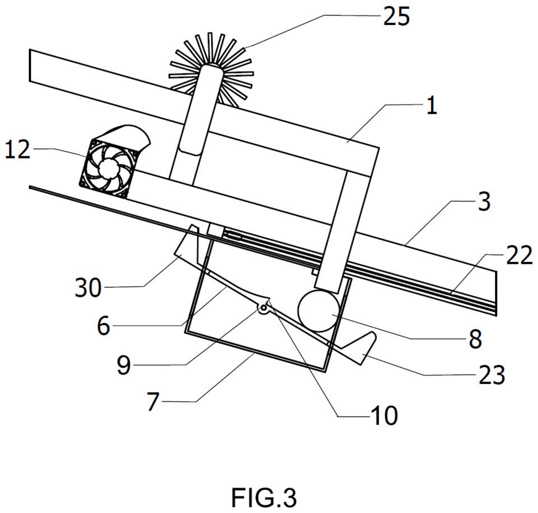

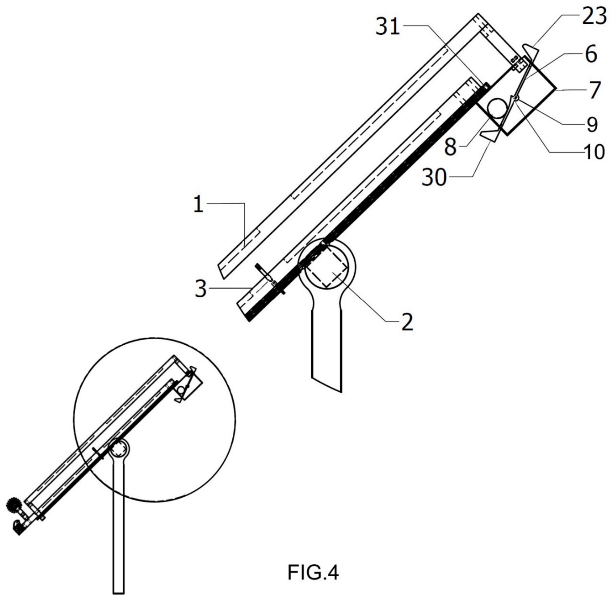

By tilting the solar panel (1) about its axis of rotation (2) in the opposite direction, and by means of the action of gravity, following the process described, the deployable surface (3) is secured as a result of the retaining lug (30), which faces the end-of-travel retainer (5), and the solar panel (1) - deployable surface (3) assembly can rotate about the axis of rotation (2), with the assembly remaining an integral assembly until another also calculated angle is surpassed, due to its weight, the ball (8) will be displaced and rise above/pass over the protrusion (10) again. At that time, the abrupt displacement of the ball (8) in the direction determined by gravity allows it to return to its initial location inside the mechanical retaining device (7). In that regard, it allows the pivoting support piece (6) to pivot in the opposite direction, with its change in position causing the retaining lug (30) to occupy its lower position when the deployable surface (3) is introduced below the solar panel (1) and causing the release lug (23) to move upwards, causing the release retainer (31) to be locked by the release lug (23), so after this time the deployable surface (3) will be fixed below the solar panel (1). Both the locked position and the unlocked position defined by the position of the pivoting piece (6) are illustrated in Figures 1, 2, 3, 4, and 8.

In an alternative embodiment, an electromechanical retraction locking device (24) is activated to lock the deployable surface (3) so that it remains fixed, such that when the photovoltaic solar panel (1) rotates about its axis of rotation (2), lifting the deployable surface (3), it cannot be retracted again. The mentioned system thereby allows, if desired, two deployable surfaces (3) to be deployed to cover both sides of the photovoltaic solar panel (1) or it allows the deployable surface (3) to be deployed on one side or the other, as desired.

Additionally, the locking of the deployable surface (3) can also be carried out by an electronic angle control device (17) that manages the angle information provided by a tracker, which is in charge of causing the photovoltaic solar panel (1), and accordingly the entire system located under same, to rotate about its axis of rotation (2).

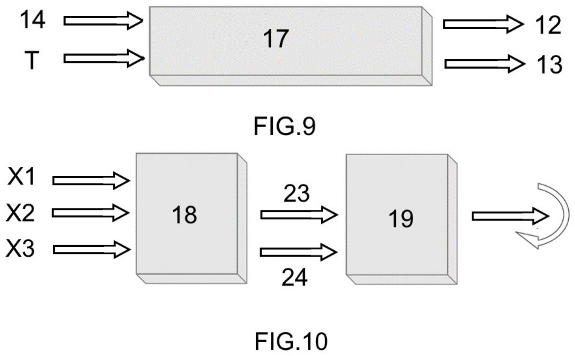

To that end, as seen in Figure 10, the electronic angle control device (18) of the solar panel (18) should determine the angle to be adopted by the photovoltaic solar panel (1) depending on agronomic signals, atmospheric signals, temperature signals, or other signals (depicted in Figure 10 as X1, X2, and X3) and determine whether to deploy or retain the deployable surfaces (3) by acting, as appropriate depending on the chosen configuration, on the release lug (23) and the electromechanical retraction locking device (24). In that regard, the tracker (19) takes the photovoltaic solar panel (1) to the angle of activation of the mechanical retaining device (7) such that the release lug (23) allows the deployable surface (3) to slide.

If the chosen configuration is by means of an electromechanical device, an electromechanical retainer controlled by the electronic angle control device (18) will determine the angle on the basis of which the electromechanical systems release their retention on the release lug (23), acting so as to allow the deployable surface (3) to be guided downwards by the guides (22) until reaching the end-of-travel retainer (5).

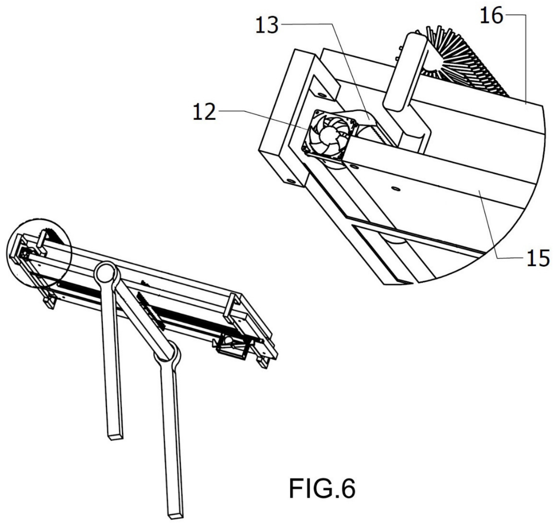

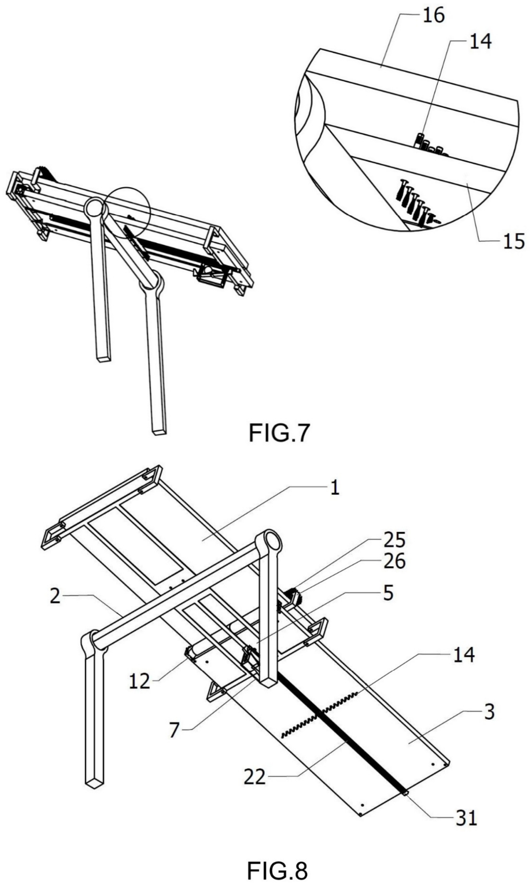

Optionally, the deployable surfaces (3) are provided with at least one blower (12) that generates an air stream on the lower part (15) and the upper part (16) of the deployable surface (3). As seen in Figure 9, the blower (12) is controlled by a blowing control device (17) which, based on the signals provided by surface water detectors (14), temperature detectors, and relative humidity detectors, allow water to be dispensed on the upper part (16) by means of water dispensing nozzles (13). The detail of this configuration is depicted in Figures 6 and 7.

The blower (12) is powered by the energy generated by the photovoltaic solar panels (1) and generates a wind stream running across both the lower part (15) and the upper part (16) such that the water or other liquid dispensed on the upper part (16) by means of water or other liquid dispensing nozzles (13), controlled by the blowing and water or other liquid dispensing control device (17), evaporates, cooling the lower part (15) and the upper part (16) of the deployable surface (3). The wind stream generated by the blower (12) on the lower part (15) and the upper part (16) causes this wind to be cooled, with the mass of air running across both faces being cooled, and due to its speed, orientation, and density, descends to cool either the crop or else people or pets located under same.

The blowing and water dispensing control device (17) manages the amount of water or other liquid supplied to the deployable surface (3) in order to prevent or reduce dripping from the deployable surface (3). To that end, there can be located at a defined distance from the upper edge of the deployable surface (3) surface water detectors (14), conductivity sensors, or others which, when connected to the blowing and water or other liquid dispensing control device (17), allow the supply of water to be evaporated in the upper part of the deployable surface (3) to be modulated.

One of the main problems with photovoltaic installations is the dust and dirt that accumulates on the photovoltaic solar panels (1); the constructive arrangement of the present invention optionally allows the mechanical energy that is generated during deployment of the deployable surface (3) when the structure rotates around the axis of rotation (2) to be utilized to clean the solar panel (1), an action which, since it is performed practically on a daily basis, will allow the solar panel (1) to barely accumulate any dirt, therefore improving the electrical conversion efficiency.

As depicted in Figure 6, the preferred arrangement of the present invention will consist of at least one rotary brush (25) attached to the deployable surface (3) at its part farthest away from the axis of rotation (2). Preferably, the rotary brush (25) is attached to the deployable surface (3) by means of a fixed L-shaped piece (26), which is fixed by means of welding, screwing, or by another means to the deployable surface (3). When the deployable surface (3) is deployed or retracted, the rotary brush (25) attached to the mentioned surface will thereby travel across the photovoltaic solar panel (1) and, as a result of friction, the rotary brush (25) will rotate as its travels across the surface of the photovoltaic solar panel (1).

Another one of the main problems with photovoltaic structures is that, acting as a water collection surface, the collected liquid falls over the lower edges of the photovoltaic solar panel (1) without being able to be utilized. The present invention also addresses the solution to the problem considered by constructively having a water collection channel on the lower edge of the deployable surface (3) with an opening that, by means of connected tubes, collects the water deposited on the surface of the photovoltaic solar panels (1) which in turn pour the liquid deposited on the deployable surface (3) located in the lower part thereof to store the collected water in a tank.

## Claims

1. A photovoltaic solar panel (1) of the type that rotates around an axis of rotation to adjust the inclination thereof depending on the altitude of the sun, **characterized in that** it comprises:
- at least one deployable surface (3) arranged under a photovoltaic solar panel (1) that can slide by gravity in the direction perpendicular to the axis of rotation (2) of the photovoltaic solar panel (1),
- linear guides (22) arranged on the deployable surface (3),
- a release retainer (31) fixed on the deployable surface (3),
- an end-of-travel retainer (5) fixed on the deployable surface (3),
- a mechanical retaining device (7) integral with the photovoltaic solar panel (1) provided with a pivoting piece (6) which pivots about its shaft (9), having a protrusion (10) and respective lugs at its ends: a retaining lug (30) and a release lug (23), and wherein the pivoting piece (6) is traversed by a ball (8) the position of which defines a locked or unlocked position, such that the release lug (23) in the locked position faces the release retainer (31) and prevents the deployable surface (3) from sliding, whereas in the unlocked position the retaining lug (30) faces the end-of-travel retainer (5) after the sliding of the deployable surface (3),
wherein the sliding of the deployable surface (3) on one or both sides of the photovoltaic solar panel (1) runs through the linear guides (22) arranged on the deployable surface (3), and wherein the mechanical retaining device (7) locks and unlocks the sliding of the deployable surface (3) depending on the position of the pivoting piece (6) defined by the position of the ball (8) which is modified according to the rotation of the photovoltaic solar panel (1).

2. The photovoltaic solar panel (1) according to claim 1, **characterized in that** the linear guides (22) are arranged on the sides or in the central part of the deployable surface (3).

3. The photovoltaic solar panel (1) according to claim 1, **characterized in that** it is provided with deployable surfaces (3) that are deployed on one or both sides of the photovoltaic solar panel.

4. The photovoltaic solar panel (1) according to claim 1, **characterized in that** the release lug (23) and the retaining lug (30) are electromechanically activated for the controlled regulation by an electromechanical retraction locking device (24) on both sides of the deployable surfaces (3).

5. The photovoltaic solar panel (1) according to claim 1, **characterized in that** the deployable surface (3) is provided on its upper part (16) with a reflective surface finish to reflect the light, generating a greater albedo effect.

6. The photovoltaic solar panel (1) according to claim 1, **characterized in that** it has water dispensing nozzles (13), surface water detectors (14), and a control device (17) that allow water to be supplied to the upper part (16) of the deployable surface (3) so that the natural evaporation of the water supplied causes the cooling of the lower part (15) and of the upper part (16) of the deployable surface (3).

7. The photovoltaic solar panel (1) according to claim 1, **characterized in that** it has at least one blower (12) that generates an air stream on the lower part (15) and the upper part (16) of the deployable surface (3), wherein the blower (12) is controlled by a control device (17) which, based on the signals provided by surface water detectors (14), temperature detectors, and relative humidity detectors, allow water to be dispensed on the upper part (16) by means of water dispensing nozzles (13).

8. The photovoltaic solar panel (1) according to claim 1, **characterized in that** it has a rotary brush (25) attached to the deployable surface (3) in such a way that the rotary brush (25) is arranged in contact with the surface of the photovoltaic solar panel (1), allowing the rotary brush (25) to travel over the surface of the photovoltaic solar panel (1) when the deployable surface (3) slides in order to remove dust from the surface of the photovoltaic solar panel (1).

9. The photovoltaic solar panel (1) according to claim 8, **characterized in that** the rotary brush (25) is attached to the deployable surface (3), preferably by means of a fixed L-shaped piece (26).

10. The photovoltaic solar panel (1) according to claim 1, **characterized in that** it is provided with a plurality of rotary brushes (25) attached to the deployable surface (3) by means of preferably fixed L-shaped pieces (26), the rotary brushes (25) being located at intervals to travel across the entire surface of the photovoltaic panel (1).

11. The photovoltaic solar panel (1) according to claim 1, **characterized in that** it has a water collection channel with an opening that, by means of connected tubes, collects the water deposited on the surface of the photovoltaic solar panels (1) which in turn pour the liquid deposited on the deployable surface (3) located in the lower part thereof to store the collected water in a tank.

12. The photovoltaic solar panel (1) according to claim 1, **characterized in that** it has electronic lights, which are preferably spectrum-modulable, that are arranged on the lower face of the deployable surface (3) to photo-stimulate the photosynthetic behavior of a crop in different environmental and temporal conditions according to its phenological progress.

13. The photovoltaic solar panel (1) according to claim 1, **characterized in that** the deployable surface (3) is implemented as a board made of a rigid material providing protection for the crop and consists of a solar panel, an opaque panel, a transparent panel, or a panel with photochromic or thermochromic behavior to control the amount of light or radiation reaching the crop.

14. The photovoltaic solar panel (1) according to claim 1, **characterized in that** it has a thermal actuation component positioned under the deployable surface (3) to heat a volume of air and influence the creation of a controllable microclimate that can be adapted to environmental conditions.
